# EUROPEAN PATENT APPLICATION

(11) **EP 3 683 749 A1**
(43) Date of publication of application: **22.07.2020**
(21) Application number: 19152503.9
(22) Date of filing: 18.01.2019
(51) Int. Cl.: G06Q 20/20, G06Q 20/38, G06Q 20/40

(54) **METHOD AND SYSTEM FOR PROCESSING A CARD BASED TRANSACTION**

(71) Applicant: PCI Booking Limited, D15 HC91 Dublin 15 (IE)
(72) Inventor: Alon, Yehuda, Dublin 15, D15 HC91 (IE)
(74) Representative: Purdylucey Intellectual Property

(57) **Abstract**

The method and system of the present invention provides an electronic payment processor platform 200 for processing card based transactions. The electronic payment processor platform 200 is compatible with a plurality of payment processors/payment gateways globally without the need of configuring a point of sale terminal 202a for a plurality of payment processors/payment gateways. Further, said electronic payment processor platform 200 enables quick processing of transactions in card present and card not present mode without requiring the point of sale terminal to be compliant with Payment Card Industry Data Security Standard.

## Description

### Field

The present invention relates to an electronic payment processor platform. More particularly, the present invention relates to processing of card payments using a plurality of payment processors/payment gateways globally without the need of configuring the point of sale terminal for said plurality of payment processors/payment gateways.

### Background

Card payment devices or card terminals are used by a large number of merchants worldwide to facilitate various types of transactions. In a typical transaction involving the purchase of a product or service at a merchant location, the payment device is presented at a point of sale terminal ("POS terminal") located at a merchant's place of business. The POS terminal may be a card reader or similar device that is capable of accessing data stored on the card. Data read from the payment device is provided to a payment processor to conduct the transaction.

Although a consumer payment device may be a credit card or debit card, it may also take the form of a "smart" card or chip. A smart card is generally defined as a pocket-sized card (or other form of portable payment device, such as a smartphone) that is embedded with a microprocessor and one or more memory chips, or is embedded with one or more memory chips with non-programmable logic.

The above process of conducting a transaction using such card payment terminal involves transmitting the card details and the transaction amount to a payment processor. The payment processor validates the terminal and/or card details and relays the card details and the transaction amount to the appropriate card network e.g. VISA(TM), MASTERCARD (TM). The card network then forwards the card details and the transaction amount to the card issuing bank. The bank checks the validity of the card details and approves or declines the transaction based on the available funds/credit limit for the card account. The approval/denial of the transaction is passed back to the card payment terminal through the card network and the card processor.

Each card payment terminal is thus configured for and/or is compatible with a single payment processor. Further if the card terminal stores card details for quick processing of subsequent transactions with the same card, then the card terminal must comply with Payment Card Industry Data Security Standard (PCI-DSS). Complying with requirements of said standard is very expensive to implement and confusing to comply with.

With the solutions provided by the two leading manufacturers - Ingenico(TM) and Verifone(TM), the card payment terminals are localized for the region (language, specific communication protocol, etc.) and limited to work with a single payment processor within said specific region. Also, the above solutions do not enable transactions in "card not present" mode.

Therefore, there is a need for an electronic payment processor platform which is compatible with a plurality of payment processors/payment gateways globally without the need of configuring or special programming the point of sale terminal for said plurality of payment processors/payment gateways. Further, said electronic payment processor platform enables quick processing of transactions in card present and card not present mode without requiring the point of sale terminal to be compliant with PCI-DSS.

It is an object to provide a computer implemented method and system to overcome at least one of these problems.

### Summary

Embodiments of the present invention are directed to a system, apparatus, and method for processing a card based transaction, as set out in the appended claims. The method of processing a card based transaction is carried out using a system 200 which includes at least a card terminal 202, a point of sale 204, a global processing server 201 operatively coupled to a plurality of payment processors (203a, 203b, 203c) and said at least one card terminal (202). The system 200 and more particularly the global processing server 201 complies with Payment Card Industry Data Security Standard (PCI-DSS).

The method typically begins with receiving 101 a card capture request from the point of sale 204, where the card capture request includes a card terminal identifier.

After the global processing server 201 receives the card capture request 101 from the point of sale terminal 204, the global processing server 201 validates 102 whether the requested card terminal 202 is active and verifies whether the card terminal 202 is associated with the requesting authorized point of sale 204. The above validation and verification of the card terminal 202 is based in part on the card terminal identifier received with the card capture request 101 from the point of sale 204.

After the card terminal 202 is validated 102 the global processing server 201 transmits a request to the card terminal 202 to initiate card capture 102. The card terminal 202 upon receiving the request captures the card details 104 from a card of a cardholder. The global processing server receives 105 card details captured by the card terminal 202 from the card terminal 202 and generates 107 a token from the received card details and the token is stored along with the received card details. Further, the token is transmitted 108 to the point of sale 204 and said token is also stored 109 at the point of sale 204.

Subsequently the global processing server 201 based on one or more requests from the point of sale 204 processes 110 one or more card based transactions based on the token via a selected payment processor 203a, selected from said plurality of payment processors (203a, 203b, 203c).

In other words, the token is stored by the point of sale 204 and in order to process a subsequent transaction the point of sale 204 transmits the token to the global processing server 201. The global processing server 201 then retrieves the card details associated with the token and uses the retrieved card details to conduct the transaction using a selected payment processor 203a coupled to the global processing server 201.

Thus the card details as such are not stored on the point of sale 204, however, the point of sale 204 is enabled to conduct a subsequent transaction using the stored token. Since, the point of sale does not store card details, thus it falls beyond the scope of PCI-DSS compliance nor does the card terminal 202 is required to be configured for a specific and/or a regional payment gateway. However, at the same time the point of sale 204, card terminal 202 in conjunction with the global payment server 201 is able to carry out card based transaction in secure and efficient manner.

Thereby, the method and system of the present invention provides an electronic payment processor platform 200 for processing card based transactions which is compatible with a plurality of payment processors/payment gateways globally without the need of configuring the point of sale terminal 204 and/or the card terminal 202 for said plurality of payment processors/payment gateways (203a, 203b, 203c). Further, said electronic payment processor platform 200 enables quick processing of transactions.

In one embodiment the method comprises sending a configuration notification to the card terminal based on said validation, wherein said configuration notification includes allowed modes of capture of card details.

In one embodiment the method comprises receiving card details from a cardholder in accordance with a selected mode of capture, wherein the selected mode of capture is selected from the allowed modes of capture of card details. In one embodiment the card details comprise one or more of card number of a card of the cardholder, expiry date of the card, name of the cardholder, card verification value of the card and an image of a signature of the cardholder.

In one embodiment the allowed modes of capture of card details comprises a swipe mode, a chip mode, a near field communication capture mode.

In on embodiment the swipe mode, receiving card details from a cardholder comprises scanning an image of a signature of the cardholder.

In one embodiment the chip mode, receiving card details from a cardholder comprises scanning an image of a signature of a cardholder as an alternative to the personal identification number.

In one embodiment a processor is configured to register the card terminal wherein registering the card terminal comprises assigning a unique terminal identification to the card terminal.

In one embodiment a processor is further configured to send a configuration notification to the card terminal based on said validation, wherein said configuration notification includes allowed modes of capture of card details.

### Brief Description of the Drawings

The invention will be more clearly understood from the following description of an embodiment thereof, given by way of example only, with reference to the accompanying drawings, in which:-
FIG. 1A is a flow chart illustrating an embodiment of the inventive method or process for performing a card payment transaction, in accordance with some embodiments of the present invention;
FIG. 1B is a flow chart illustrating an embodiment of the inventive method or process for performing a card payment transaction, in accordance with another embodiment of the present invention;
Fig. 2 is a functional block diagram illustrating the primary components of a system/ payment processor platform which performs the inventive method or process for performing a card payment transaction, in accordance with some embodiments of the present invention;
Fig. 3 is a functional block diagram illustrating the primary components of a point of sale, that may be used as part of the inventive system and method for performing a card payment transaction, in accordance with some embodiments of the present invention; and
Fig. 4 is a functional block diagram illustrating the primary components of a card terminal, that may be used as part of the inventive system and method for performing a card payment transaction, in accordance with some embodiments of the present invention.

### Detailed Description of the Drawings

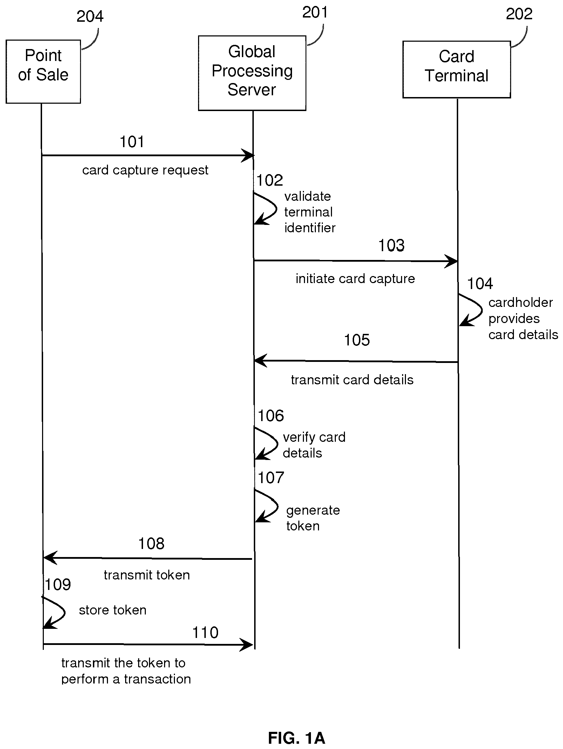

FIG. 1A is a flow chart illustrating an embodiment of the inventive method or process for performing a card payment transaction, in accordance with some embodiments of the present invention.

The method of processing a card based transaction is carried out using a system 200 which includes at least a card terminal 202, a point of sale 204, a global processing server 201 operatively coupled to a plurality of payment processors (203a, 203b, 203c), the point of sale 204 and said at least one card terminal (202). The system 200 and more particularly the global processing server 201 being compliant with the Payment Card Industry Data Security Standard (PCI-DSS).

Initially a card terminal 202 is set up by registering the card terminal 202 with the global processing server 201 for processing card based transactions. Upon registration the card terminal 202 is assigned a unique card terminal identifier by the global processing server 201. The card terminal identifier may be a number or an alphanumeric string or a byte sequence which uniquely identifies the particular card terminal 202 to the global processing server 201.

The process of registering the card terminal 202 with the global processing server 201 further includes sending a configuration notification to the card terminal 202, where the configuration notification includes the card terminal identifier, terminal display elements such as merchant logo or other logos and allowed modes of capture of card details. The allowed modes of capture of card details includes one of a swipe mode, a chip mode, a near field communication capture mode. In the swipe mode a magnetic stripe on a card is read by the card terminal 202 using a magnetic stripe reader to capture card details. In the chip mode a secure chip embedded on a card is read by card terminal 202 using a chip reader to capture card details. In the near field communication capture mode a near field communication device embedded on a card is read by the card terminal 202 using a near field communication transceiver to capture card details.

Once the card terminal 202 is set up with the global processing server 201 for processing card based transactions, a cardholder's card details are captured by the card terminal 202 in accordance with one of the allowed modes of capture of card details of the cardholder. The card details captured comprise one or more of card number of a card of the cardholder, expiry date of the card, name of the cardholder, and card verification value of the card. Also an image of a signature of the cardholder is captured in the swipe mode or the chip mode, image of a signature of a cardholder to be included in the card details of the card.

The method typically begins with receiving 101 a card capture request from the point of sale 204 by the global processing server 201, where the card capture request includes the card terminal identifier. After the global processing server 201 receives the card capture request from the point of sale 204, the global processing server 201 validates 102 whether the card terminal 202 is active and verifies whether the card terminal 202 is associated with the requesting authorized point of sale 204. The above validation and verification 102 of the card terminal 202 is based in part on the card terminal identifier received with the card capture request from the point of sale 204.

After the card terminal 202 is validated 102 the global processing server 201 sends 103 a request to the card terminal 202 to initiate 103 capturing of card details, where the request includes allowed modes of capture of card details. The cardholder then provides 104 the card for the capture of card details. The card terminal 202 then captures the card details from the card provided by the cardholder. Upon capturing the card details in accordance with one of the allowed modes of capture, the card terminal 202 transmits 105 the card details to the global processing server 201. The global processing server 201 upon receiving the card details verifies 106 the card details using a selected payment processor 203a. Upon verification 106 of the card details, the global processing server 201 generates a token 107 associated with the card details. The card details and the associated token are stored by the global processing server 201. Also, the global processing server 201 sends 108 a confirmation notification to the point of sale 204, where the confirmation notification includes the token associated with the card details.

The point of sale 204 upon receiving the a confirmation notification including the token stores 109 the token for carrying out subsequent transactions using said token.

Subsequently the global processing server 201 based on one or more requests 110 from the point of sale 204 processes one or more card based transactions based on the token via a selected payment processor 203a, selected from said plurality of payment processors (203a, 203b, 203c). In other words, the token is stored by the point of sale 204. Further, the point of sale in order to process a subsequent transaction transmits 110 the token to the global processing server 201. The global processing server 201 then retrieves the card details associated with the token and uses the retrieved card details to conduct the transaction using a selected payment processor 203a coupled to the global processing server 201.

Further, the point of sale 204 stores said token and associates said token with the card of the cardholder. This stored association of the token with the card of the cardholder allows retrieval of the token using e.g. cardholder's name or user name or user identifier of the cardholder. The retrieved token could then be used by the point of sale 204 to initiate one or more transactions using the stored token in accordance with the process disclosed above.

The one more transactions using the unique card identifier includes processing the captured card through the selected payment processor 203a for pre-authorization, charging the card, capture a previously authorized transaction, cancelling a pre-authorized transaction, processing a refund, relaying the card to a third party, or deleting the card details from the global processing server 201.

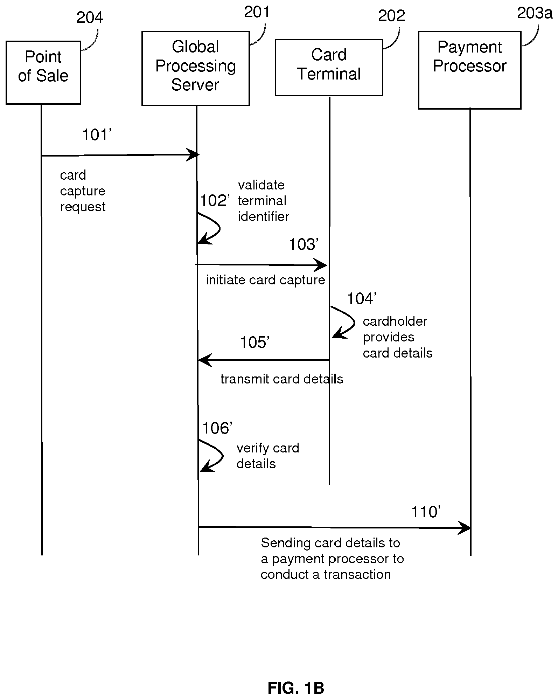

FIG. 1B is a flow chart illustrating an embodiment of the inventive method or process for performing a card payment transaction, in accordance with another embodiment of the present invention.

The method of processing a card based transaction is carried out using a system 200 which includes at least a card terminal 202, a point of sale 204, a global processing server 201 operatively coupled to a plurality of payment processors (203a, 203b, 203c), the point of sale 204 and said at least one card terminal (202). The global processing server 201 being compliant with the Payment Card Industry Data Security Standard (PCI-DSS).

Initially a card terminal 202 is set up by registering the card terminal 202 with the global processing server 201 for processing card based transactions. Upon registration the card terminal 202 is assigned a unique card terminal identifier by the global processing server 201. The card terminal identifier may be a number or an alphanumeric string or a byte sequence which uniquely identifies the particular card terminal 202 to the global processing server 201.

The process of registering the card terminal 202 with the global processing server 201 further includes sending a configuration notification to the card terminal 202, where the configuration notification includes the card terminal identifier, terminal display elements, such as the merchant logo or other logos and allowed modes of capture of card details. The allowed modes of capture of card details includes one of a swipe mode, a chip mode, a near field communication capture mode. In the swipe mode a magnetic stripe on a card is read by the card terminal 202 using a magnetic stripe reader to capture card details. In the chip mode a secure chip embedded on a card is read by card terminal 202 using a chip reader to capture card details. In the near field communication capture mode a near field communication device embedded on a card is read by the card terminal 202 using a near field communication transceiver to capture card details.

Once the card terminal 202 is set up with the global processing server 201 for processing card based transactions, a cardholder's card details are captured by the card terminal 202 in accordance with one of the allowed modes of capture of card details of the cardholder. The card details captured comprise one or more of card number of a card of the cardholder, expiry date of the card, name of the cardholder, and card verification value of the card. Also an image of a signature of the cardholder is captured in the swipe mode or the chip mode, image of a signature of a cardholder to be included in the card details of the card.

The method typically begins with receiving 101 a card capture request from the point of sale 204 by the global processing server 201, where the card capture request includes the card terminal identifier and a transaction amount. After the global processing server 201 receives the card capture request from the point of sale 204, the global processing server 201 validates 102 whether the card terminal 202 is active and verifies whether the card terminal 202 is associated with an authorized point of sale 204. The above validation and verification 102 of the card terminal 202 is based in part on the card terminal identifier received with the card capture request from the point of sale 204.

After the card terminal 202 is validated 102 the global processing server 201 sends 103 a request to the card terminal 202 to initiate 103 capturing of card details, where the request includes allowed modes of capture of card details. The cardholder then provides 104 the card for the capture of card details. The card terminal 102 then captures the card details from the card provided by the cardholder. Upon capturing the card details in accordance with one of the allowed modes of capture, the card terminal 202 transmits 105 the card details to the global processing server 201. The global processing server 201 upon receiving the card details verifies 106 the card details using a selected payment processor 203a. Further, upon verification 106, the global processing server sends 110 the card details and the transaction amount to the selected payment processor 203a for processing of the card based transaction.

Thereby, the method and system of the present invention provides an electronic payment processor platform 200 for processing card based transactions which is compatible with a plurality of payment processors/payment gateways globally without the need of configuring the point of sale terminal 204 and/or the card terminal 202 for said plurality of payment processors/payment gateways (203a, 203b, 203c). Further, said electronic payment processor platform 200 enables quick processing of transactions in card present and card not present mode without requiring the point of sale terminal to be compliant with PCI-DSS.

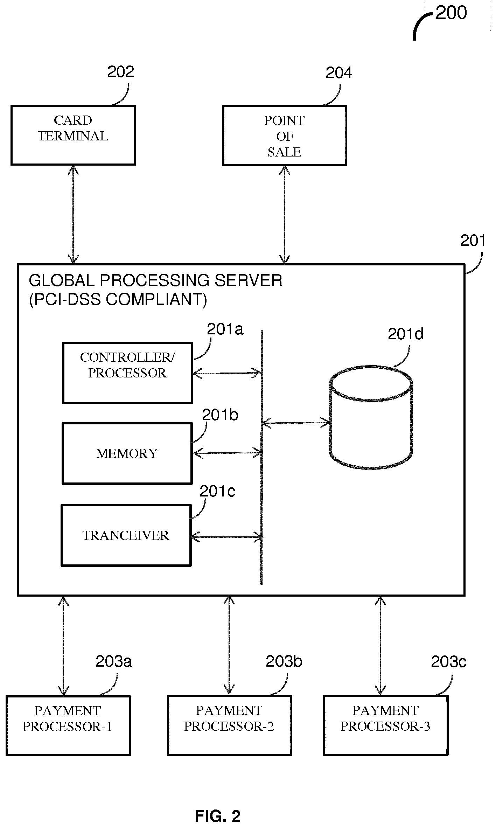

Fig. 2 is a functional block diagram illustrating the primary components of a system which performs the inventive method or process for performing a card payment transaction, in accordance with some embodiments of the present invention. The system for processing card based transactions comprises a global processing server 201 which is operatively coupled to a point of sale 204, at least one card terminal 202 and a plurality of payment processors (203a, 203b, 203c). The global processing server comprises a processor 201a, a transceiver 201c, a memory 201b, and database 201d. The system 200 and more specifically global processing server 201 complies with Payment Card Industry Data Security Standard (PCI-DSS).

The processor 201a of the global processing server 201 is configured to receive a registration request from a card terminal 202 through the transceiver 201c. The processor 201a registers the card terminal 202 and assigns a unique card terminal identifier to the card terminal 202. Upon registering the card terminal 202, the processor 201a is further configured to send a configuration notification to the card terminal 202 through the transceiver 201c. The configuration notification includes card terminal identifier, terminal display elements, such as the merchant logo or other logos and allowed modes of capture of card details.

The processor 201a is further configured to receive a card capture request through the transceiver 201c from a point of sale 204 where the request comprises the card terminal identifier. The processor 201a validates the card terminal 202 as active and associated with an authorized point of sale 204 at least based on the card terminal identifier.

The processor 201a is further configured to transmit a card capture request to the card terminal 202. The processor 201a then receives card details from the card terminal 202 through the transceiver 201c upon transmission of card capture request to said card terminal 202. Further the processor 201a generates a token from the received card details and the processor 201a stores the received card details and token associated with the card details to the memory 201b. In a preferred embodiment the processor 201a stores the received card details and the token associated with the card details to the database 201d. Also, the processor 201a sends a confirmation notification to the card terminal 202, where the confirmation notification comprises said token.

The processor 201a is further configured to process one or more card based transaction based on receiving a transaction request from the point of sale 204 through said transceiver 201c, where the transaction request comprises the token. The processor 201a retrieves the card details associated with said token from the memory 201b or the database 201d. Further, the processor 201a transmits the retrieved card details to a selected payment processor 203a through the transceiver 201c. The payment processor 203a processes the transaction based on the received card details from the processor 201a.

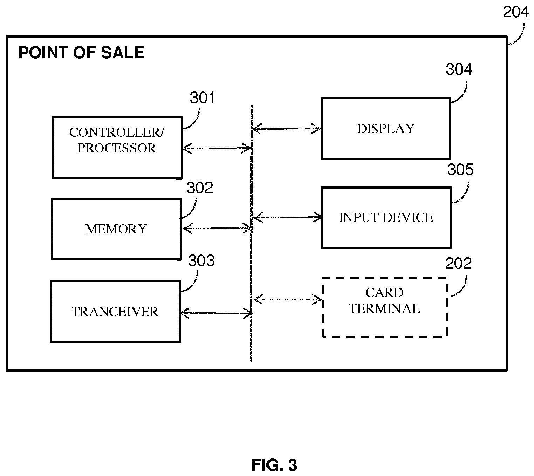

Fig. 3 is a functional block diagram illustrating the primary components of a point of sale 204, that may be used as part of the inventive system and method for performing a card payment transaction, in accordance with some embodiments of the present invention. The card payment terminal comprises a processor 301 operatively coupled to a memory 302, a transceiver 303, a display 304, an input device 305 and a card terminal 202.

The processor 301 of the point of sale 204 is configured to send a card capture request to the global processing server 201 through the transceiver 303.

Also, the processor 301 is configured to receive a notification from the global processing server 201, wherein the notification comprises success of card capture and a token associated with the card of the captured card details. The processor 301 is further configured to associate the token to the card of the cardholder and store the associated token to the memory 302.

The processor 301 is further configured to process one or more card based transactions based on said stored token via the global payment server 201 using a selected payment processor 203a.

In an embodiment, the processor 301 is configured to receive a transaction amount entered in the input device 305. In an embodiment, the processor 301 is configured to display the progress and status of a transaction on the display 304.

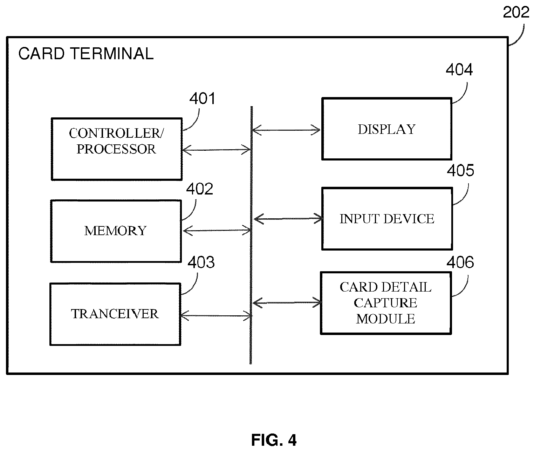

Fig. 4 is a functional block diagram illustrating the primary components of a card terminal 202, that may be used as part of the inventive system and method for performing a card payment transaction, in accordance with some embodiments of the present invention. The card terminal 202 comprises a processor 401 operatively coupled to a memory 402, a transceiver 403, a display 404, an input device 405 and a card detail capture module 406.

The processor 401 of the card terminal 202 is configured to send a registration request to the global processing server 201 through the transceiver 403. Upon registration the processor 401 is further configured to receive a configuration notification through the transceiver 403. The configuration notification includes a card terminal identifier, terminal display elements, such as the merchant logo or other logos and allowed modes of capture of card details. The allowed mode of capture includes one of a swipe mode, a chip mode, a near field communication capture mode. The processor 401 is further configured to store the card terminal identifier and the allowed modes of capture to the memory 402.

Also, the processor 401 is configured to capture card details from a cardholder using the card detail capture module 406 using any one of the above mentioned allowed modes of capture. In an embodiment the processor 401 receives the card details of a card of a cardholder using the card detail capture module 406 where the card detail capture module is a magnetic stripe reader and where the allowed capture mode is the swipe mode. In an embodiment the processor 401 receives the card details of a card of a cardholder using the card detail capture module 406 where the card detail capture module is a near field communication transceiver and where the allowed capture mode is the near field communication capture mode. In an embodiment the processor 401 receives the card details of a card of a cardholder using the card detail capture module 406 where the card detail capture module is a chip reader and where the allowed capture mode is the chip mode. In an another embodiment the processor 401 receives an image of a signature of a cardholder of a card using an image capture device comprised within the card detail capture module 406 where the allowed capture mode is the chip mode or the swipe mode.

In an embodiment, the processor 401 is configured to receive a transaction amount entered in the input device 405. In an embodiment, the processor 401 is configured to display the progress and status of a transaction on the display 404.

Further, a person ordinarily skilled in the art will appreciate that the various illustrative logical/functional blocks, modules, circuits, and process steps described in connection with the embodiments disclosed herein may be implemented as electronic hardware, or a combination of hardware and software. To clearly illustrate this interchangeability of hardware and a combination of hardware and software, various illustrative components, blocks, modules, circuits, and steps have been described above generally in terms of their functionality. Whether such functionality is implemented as hardware or a combination of hardware and software depends upon the design choice of a person ordinarily skilled in the art. Such skilled artisans may implement the described functionality in varying ways for each particular application, but such obvious design choices should not be interpreted as causing a departure from the scope of the present invention.

The process described in the present disclosure may be implemented using various means. For example, the process described in the present disclosure may be implemented in hardware, firmware, software, or any combination thereof. For a hardware implementation, the processing units, or processors(s) may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, software codes may be stored in a memory and executed by a processor. Memory may be implemented within the processor unit or external to the processor unit. As used herein the term "memory" refers to any type of volatile memory or nonvolatile memory.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A method of processing a card based transaction in a system comprising at least a point of sale, at least a card terminal, and a global processing server operatively coupled to a plurality of payment processors and said global processing server operatively coupled to the point of sale and the card terminal, the method comprising the steps of:
receiving a card capture request from the point of sale, said request comprising a card terminal identifier;
validating the card terminal as active and associated with the point of sale at least based on the card terminal identifier;
receiving card details from the card terminal upon validation of said card terminal;
verifying the received card details using a selected payment processor, selected from said plurality of payment processors;
generating a token associated to said verified card details and storing said card details and the associated token;
sending the token along with an acknowledgement of successful card capture to the point of sale;
performing a transaction with the captured card details by sending the token to the global processing server for processing the transaction via a selected payment processor, selected from said plurality of payment processors.

2. The method of claim 1 further comprising storing said token at the point of sale and associating said token with a cardholder.

3. The method of claim 1 further comprising registering the card terminal with the global processing server.

4. The method of claim 3 wherein registering the card terminal comprises assigning a unique terminal identification to the card terminal.

5. The method of claim 1 further comprising: sending a configuration notification to the card terminal based on said validation, wherein said configuration notification includes allowed modes of capture of card details.

6. The method of claims 1 further comprising receiving card details from a cardholder in accordance with a selected mode of capture, wherein the selected mode of capture is selected from the allowed modes of capture of card details.

7. The method of claim 1 and 5, wherein the card details comprise one or more of card number of a card of the cardholder, expiry date of the card, name of the cardholder, card verification value of the card and an image of a signature of the cardholder.

8. The method of claim 6, wherein the allowed modes of capture of card details comprises a swipe mode, a chip mode, a near field communication capture mode.

9. The method of claims 6, 7 or 8, wherein in the swipe mode, receiving card details from a cardholder comprises scanning an image of a signature of the cardholder.

10. The method of claims 6, 7 or 8, wherein in the chip mode, receiving card details from a cardholder comprises scanning an image of a signature of a cardholder as an alternative to the personal identification number.

11. A method of processing a card based transaction in a system comprising at least a point of sale, at least a card terminal, and a global processing server operatively coupled to a plurality of payment processors and said global processing server operatively coupled to the point of sale and the card terminal, the method comprising the steps of:
receiving a card capture request from the point of sale, said request comprising a card terminal identifier;
validating the card terminal as active and associated with the point of sale at least based on the card terminal identifier;
receiving card details from the card terminal upon validation of said card terminal;
verifying the received card details using a selected payment processor, selected from said plurality of payment processors;
performing a transaction with the captured card details and processing the transaction via a selected payment processor, selected from said plurality of payment processors.

12. The method of claim 11 further comprising registering the card terminal with the global processing server.

13. The method of claim 12 wherein registering the card terminal comprises assigning a unique terminal identification to the card terminal.

14. A system for processing card based transactions, comprising:
a global processing server operatively coupled to a point of sale, a card terminal, and a plurality of payment processors, said global processing server comprising:
a processor, a transceiver, and a memory, said processor configured to:
receive a card capture request from the point of sale, said request comprising a card terminal identifier;
validate the card terminal as active and associated with the point of sale at least based on the card terminal identifier;
receive card details from the card terminal upon validation of said card terminal;
verify the received card details using a selected payment processor, selected from said plurality of payment processors;
generate a token associated to said verified card details and storing said card details and the associated token;
send the token along with an acknowledgement of successful card capture to the point of sale;
perform a transaction by receiving the token and retrieving said stored card details associated to said token and processing the transaction using said retrieved card details via a selected payment processor, selected from said plurality of payment processors.

15. A point of sale for processing card based transactions, the point of sale operatively coupled to a global processing server and a card terminal, said global processing server operatively coupled to a plurality of payment processors, said point of sale comprising:
a memory;
a transceiver;
a processor operatively coupled to the memory and the transceiver, said processor configured to:
send a card capture request to the global processing server, said request comprising a card terminal identifier;
receiving a token along with an acknowledgement of successful card capture to the point of sale, wherein said token is generated by the global processing server based on the card details;
performing a transaction by sending the token to the global processing server, wherein the global processing server retrieves stored card details associated to said token and performs the transaction using said retrieved card details via a selected payment processor, selected from said plurality of payment processors.
